# EUROPÄISCHE PATENTSCHRIFT

(11) **EP 1 037 009 B1**
(45) Veröffentlichungstag und Bekanntmachung des Hinweises auf die Patenterteilung: **19.01.2005**
(21) Anmeldenummer: 99810208.1
(22) Anmeldetag: 09.03.1999
(51) Int. Cl.: G01B 7/34, G01N 27/00

(54) **Positionierkopf für ein Rastersondenmikroskop**
Positioning head for a scanning probe microscope
Positionneur pour un microscope à sonde de balayage

(43) Veröffentlichungstag der Anmeldung: 20.09.2000
(73) Patentinhaber: Nanosurf AG, 4410 Liestal (CH)
(72) Erfinder: Howald, Lukas Emanuel Dr. phil., 4131 Dornach (CH)
(74) Vertreter: Barth, Carl Otto, Dipl.-Ing.

(56) Entgegenhaltungen:
- EP-A- 0 389 115
- EP-A- 0 763 881
- EP-A- 0 778 657
- EP-A- 0 807 799
- WO-A-96/07074
- US-A- 5 103 095
- R. GARCIA CANTU ; M.A. HUERTA GARNICA: "Inductoscanner Tunneling Microscope" SURFACE SCIENCE, Bd. 181, 1987, Seiten 216-221, XP002115093 amsterdam

## Beschreibung

### Technisches Gebiet der Erfindung

Die Erfindung liegt auf dem Gebiet der Positioniergeräte, d.h. der fein positionierbaren Aktuatoren, wie sie z. B. für Rastertunnelmikroskope und andere abtastende Mikroskope, sog. Rastersondenmikroskope (Scanning Probe Microscopes), eingesetzt werden. Im einzelnen betrifft die Erfindung die Konstruktion eines solchen mehrachsigen Aktuators, der dreidimensionale Bewegungen eines Sensors oder einer Abtastspitze im Raum mit hoher Stellgenauigkeit ausführen kann und dabei von vergleichsweise robuster und kompakter Bauweise ist. Die Erfindung betrifft ausserdem einen Messkopf für ein Rastersondenmikroskop mit einem solchen Aktuator. Die sinnreiche Integration des Aktuators führt zu einem robusten und einfach zu handhabenden Messkopf, der Vorteile gegenüber dem Stand der Technik aufweist.

### Stand der Technik

In der Scanning Probe Microscopy, der Rastersondenmikroskopie, ist die Positionierung der Abtastspitze von Anfang an eine nicht ganz problemlose Aufgabe gewesen, da diese Positionierung einerseits mit möglichst grosser Auflösung erfolgen soll, andererseits aber auch ein möglichst grosser Stellbereich erwünscht ist. Dazu kommt noch, dass eine gute Wiederholbarkeit, d.h. möglichst hysteresefreie Einstellbarkeit, ebenso gefordert wird wie eine geringe Masse schon wegen des Energieverbrauchs. Wenn man dazu noch den Wunsch nach rationeller, preisgünstiger Fertigung eines entsprechenden Messkopfes addiert, so wird ersichtlich, warum bereits eine ganze Reihe verschiedener Lösungsansätze für die Positionierung von Abtastspitzen entwickelt wurde. Piezo-Aktuatoren werden dazu ebenso benutzt wie z.B. elektromagnetische oder elektrostatische Betätigungselemente für die Aktuatoren. Viele der heutigen SPMs (Scanning Probe Microscopes) benutzen Piezo-Aktuatoren für die notwendige Feinpositionierung, die sich im Mikrometer- bis Sub-Nanometer-Bereich abspielt, aber es gibt auch andere Ansätze, wie nachfolgend gezeigt werden wird.

So vorteilhaft Piezo-Aktuatoren in verschiedener Hinsicht sind, so haben sie doch eine Reihe von Nachteilen. Dazu gehören insbesondere die aufwendigen elektrischen Steuereinrichtungen und die vergleichsweise hohen Betätigungsspannungen, die oft im 100- oder 1000-V-Bereich liegen und daher entsprechende Schutzeinrichtungen erfordern. Auch ist die Linearität nicht immer in wünschenswerter Weise gegeben und muss dann regeltechnisch verbessert werden. Auch die Hysterese kann ein Problem darstellen, das sich nur schwer beseitigen lässt. Weiterhin lassen sich grosse Stellwege, die ja fast immer erwünscht sind, nur mit relativ grossen Anordnungen realisieren. Dennoch haben Piezo-Aktuatoren wegen ihrer vergleichsweise grossen Robustheit und ihrer Preiswürdigkeit einen festen Platz im Markt gefunden.

Aber es sind immer schon auch andere, z.B. magnetostriktive, elektrostriktive oder elektrostatische Lösungsansätze verfolgt worden. Allerdings schienen solche Ansätze bisher nicht für grosse Stellwege geeignet, d.h. Aktuator-Stellwege im Bereich um oder über 50 µm. Dies hat die Einsatzmöglichkeiten - und damit auch das Interesse an solchen Aktuatoren - begrenzt.

Dagegen sind elektromagnetische Aktuatoren, oft als Voice-Coil-Anordnungen bezeichnet, von Anfang an auf reges Interesse gestossen und werden in einer Vielzahl verschiedener Anwendungen vor allem ausserhalb der Rastersondenmikroskopie benutzt. Ein Beispiel aus der Unterhaltungselektronik sind CD-Leseköpfe, die von mehrdimensionalen Aktuatoren positioniert werden. Inhärent sind elektromagnetische Aktuatoren recht linear, können vergleichsweise grosse Stellwege bis in den mm-Bereich abdecken und sind mit Niederspannung betreibbar. Oft wird eine Tauchspulen-Anordnung mit stationärem Permantentmagneten und beweglicher Spule verwendet, aber auch andere Anordnungen sind bekannt.

Eine solche Anordnung für die Verwendung in einem Rastersondenmikroskop (oder einem entsprechenden Speicher) wird von G. Binnig et al in der PCT-Patentanmeldung WO 96/07074 beschrieben: "Fine positioning apparatus with atomic resolution". In dieser Anordnung sind zwei induktive Aktuator-Einheiten vorgesehen, die für eine Positioniergenauigkeit von besser als 1 nm sorgen sollen. Eine mechanische Dämpfungseinrichtung wirkt dabei als Bremse und zusammen mit einer speziellen mechanischen Anordnung als veränderliche Untersetzung des elektromagnetischen Aktuators. Dies soll zwar die Positioniergenauigkeit der Gesamteinrichtung verbessern, insgesamt macht es den Aufbau aber relativ aufwendig und massereich. Das schränkt einerseits den Anwendungsbereich erheblich ein. Andererseits scheint die Anordnung in der gezeigten Form auch nicht für eine preiswerte Fertigung geeignet. So müssen beispielsweise die elektrischen Zuleitungen zu den beweglichen Tauchspulen (Voice Coils) ebenfalls beweglich sein, was sowohl für die Fertigung als auch für die Zuverlässigkeit problematisch sein kann.

Ein weiterer Ansatz wurde von S.T. Smith et al in der Zeitschrift "Rev. Sci. Instruments", Vol. 65, No. 4, April 1994, auf den Seiten 910 pp. unter dem Titel "A simple two-axis ultraprecision actuator" beschrieben. Dort ist ein Aktuator mit zwei Aktuatoreinheiten dargestellt, von denen eine zur translatorischen Positionierung, die andere zur Winkelpositionierung dient. Dabei sollen translatorische Wege von 80 µm erreicht werden, wobei die Positioniergenauigkeit im nm-Bereich liegen soll, während Winkelbereiche von 3,6 mrad mit Genauigkeiten von 0,6 nrad erreicht werden sollen. Zwar ist dieser Aktuator nur zweiachsig ausgebildet, was seine Einsatzmöglichkeiten einschränkt, aber er weist in eine Richtung, wie ein relativ einfach aufgebauter Aktuator grundsätzlich gestaltet sein könnte. Dabei darf aber nicht übersehen werden, dass der von S.T. Smith gezeigte Aktuator nach der Darstellung im genannten Artikel eigentlich nur zur Erläuterung der Theorie und generellen Funktionsweise geeignet erscheint. Er sieht weder produktionstechnisch ausgereift aus, noch scheinen fertigungstechnische Überlegungen bei seinem Design überhaupt eine Rolle gespielt zu haben. Jedenfalls ist er kaum als Modell für einen robusten, relativ einfach herzustellenden Aktuator anzusehen. Wichtiger noch, ist nicht beschrieben, wie der beschriebene Aktuator dreidimensional benutzt werden kann.

Einen weiteren, recht interessanten Ansatz zeigen R. Garcia Cantu et al in ihrem Artikel "Inductoscanner Tunneling Microscope", erschienen in Surface Science 181, pp. 216-221, Elsevier Science Publishers B.V. 1997. Der dort beschriebene Aktuator für ein Raster-Tunnelmikroskop weist ein Paar sich diametral gegenüberliegende Tauchspul-Betätigungselemente auf, zwischen denen sich ein Träger mit der Abtastspitze erstreckt und die sich vorteilhafterweise mit Niederspannung betreiben lassen. Die Aufhängung erfolgt über Metallmembranen ähnlich einem Aneroid-Barometer. Allerdings demonstrieren die Autoren keine Auflösung im Sub-nm-Bereich, wie sie für die gewünschte Anwendung erforderlich ist und lösen daher nicht die Aufgabe, die sich die Erfindung gestellt hat. Auch scheint die gewählte Anordnung der sich gegenüberliegenden Tauchspul-Aktuatoren etwas voluminös und kaum für eine rationelle Fertigung geeignet. Dazu kommt, dass ein grosses Volumen üblicherweise eine tiefe Eigenresonanz ergibt, die nicht immer erwünscht ist, und dass eine grosse Masse und die damit einhergehende grosse Angriffsfläche fast immer eine grosse Anfälligkeit für äussere Störungen bedingt.

Wie aus dem Gesagten ersichtlich, hat es sich die Erfindung zum Ziel gesetzt, insbesondere für Rastersondenmikroskope, einen in allen drei Dimensionen steuerbaren, elektromagnetischen Aktuator zu schaffen, der einen vergleichsweise einfachen und robusten Aufbau mit möglichst grossen Stellwegen - vorzugsweise im 100-µm-Bereich - bei gleichzeitig guter Positioniergenauigkeit - vorzugsweise im Sub-nm-Bereich - und hoher Linearität möglichst ohne externe, insbesondere mechanische Rückkopplung verbindet. Dazu soll die Anordnung kompakt und möglichst einfach zu produzieren sein.

Diese recht komplexe Aufgabe löst der Positionierkopf gemäss der Erfindung im Prinzip relativ einfach durch die Anordnung von vorzugsweise drei in einer Ebene liegenden und/oder gleichartigen elektromagnetischen Aktuatoreinheiten, die derart mit einer starren, die Abtastspitze tragenden Hebelstruktur verbunden sind, dass letztere je nach Betätigung der Aktuatoreinheiten um eine beliebige Drehachse in der genannten Ebene gekippt werden und/oder translatorisch im wesentlichen senkrecht zur genannten Ebene verschoben werden kann, wodurch die ausserhalb der genannten Ebene liegende Abtastspitze quasi beliebig im Raum bewegbar ist.

Dabei weisen die drei Aktuatoreinheiten zumindest annähernd gleiche Wirkungsrichtungen auf und liegen vorzugsweise im wesentlichen in einer geeigneten Ebene. Dazu könnte vorteilhafterweise die für jede Aktuatoreinheit vorgesehene Feder als Teilfeder einer für alle Aktuatoreinheiten gemeinsamen Membranfeder ausgebildet sein, was den Bauaufwand vermindern würde. Weitere vorteilhafte Ausführungsformen ergeben sich aus der nachfolgenden Beschreibung eines Ausführungsbeispiels und aus den Patentansprüchen.

### Ausführungsbeispiel

Nachfolgend wird ein Ausführungsbeispiel der Erfindung in Verbindung mit den Zeichnungen näher beschrieben. In diesen zeigen:
- Fig. 1: eine Gesamtansicht eines Aktuators gemäss der Erfindung;
- Fig. 2: Einzelheiten des in Fig.1 dargestellten Aktuators;
- Fig. 3: ein Beispiel für eine elektrische Steuerschaltung.

### Bezugszeichenliste

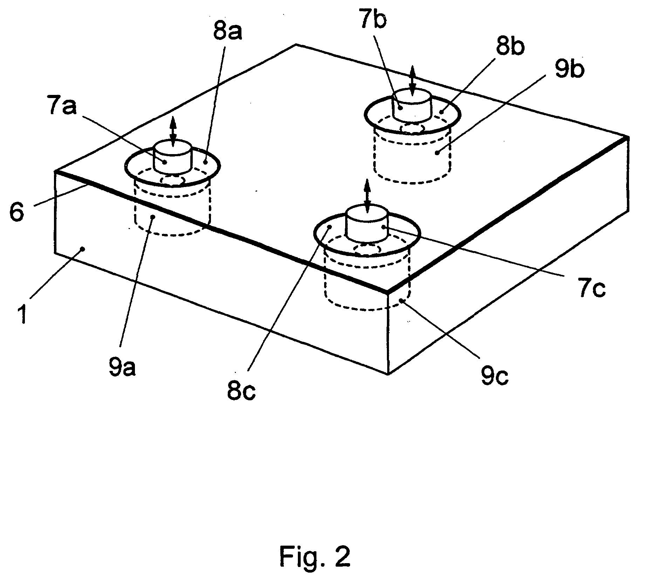

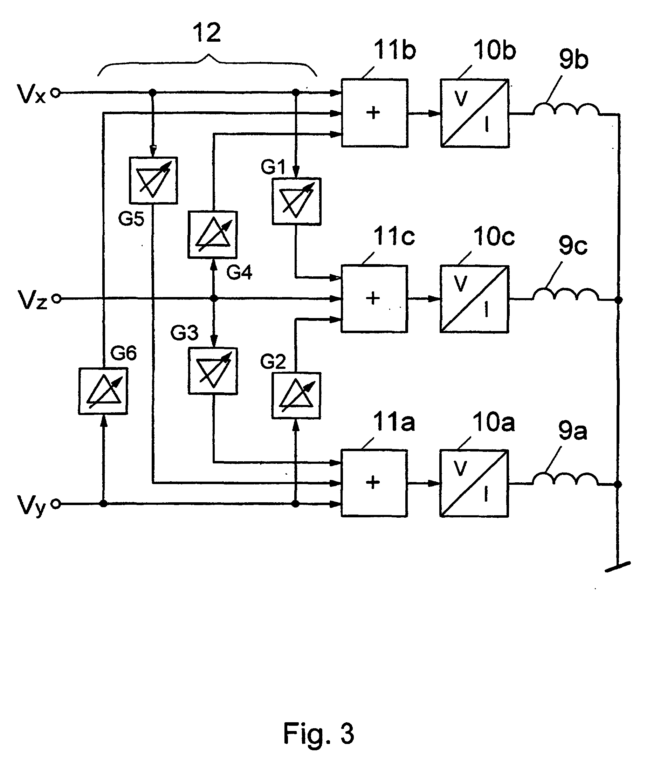

**Fig. 1**
   - 1: Gehäuse
   - 2: Hebelrahmen
   - 3: Spitzenhalter
   - 4: Abtastspitze
   - 5a, 5b, 5c: Aktuatoreinheit
**Fig. 2 (zusätzlich)**
   - 6: Membranfeder
   - 7a, 7b, 7c: Permanentmagnet
   - 8a, 8b, 8c: Federelement
   - 9a, 9b, 9c: Spule
**Fig. 3 (zusätzlich)**
   - 10a, 10b, 10c: U/I-Wandler
   - 11a, 11b, 11c: Addierer
   - 12: Verstärkergruppe
   - Vx, Vy, Vz: Eingangsklemme

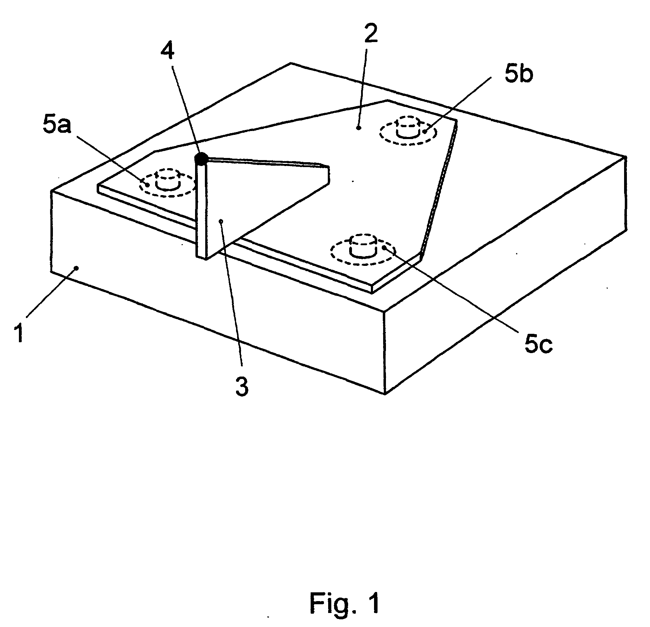

Fig.1 ist eine Gesamtansicht, die die wesentlichen Teile der bevorzugten Ausführungsform des erfindungsgemässen Aktuators zeigt. In oder auf einem Gehäuse 1 sind drei Aktuatoreinheiten 5a bis 5c im wesentlichen in einer Ebene angeordnet, deren bewegliche Teile (genauer in Fig. 2 gezeigt) starr mit einem Hebelrahmen 2 verbunden sind. Letzterer trägt auf seiner Oberseite einen fest mit ihm verbundenen Spitzenhalter 3, der in die Abtastspitze 4 ausläuft. Aufgabengemäss soll diese Abtastspitze auf dem abzutastenden Werkstück (nicht dargestellt) in allen drei Raumrichtungen mit grosser Genauigkeit positioniert werden.

Diese Positionierung geschieht durch Kippen und/oder Verschieben des Hebelrahmens 2 mittels der Aktuatoreinheiten 5a bis 5c, von denen jede elektrisch einzeln ansteuerbar ist. Werden beispielsweise die beiden Aktuatoreinheiten 5a und 5c blockiert und nur die Aktuatoreinheit 5b angesteuert, so erfolgt eine Kippbewegung des Hebelrahmens 2 um eine Achse 5a-5c. Dadurch bewegt sich die Abtastspitze 4 auf einem Kreisbogen um diese Achse 5a-5c. Bei gleichmässiger Ansteuerung aller drei Aktuatoreinheiten führen Hebelrahmen 2 und Abtastspitze 4 eine translatorische Bewegung senkrecht zur Gehäuseoberfläche bzw. zur Ebene der drei Aktuatoreinheiten durch. Es ist offensichtlich, dass durch geeignete Ansteuerung der drei Aktuatoreinheiten in gewissen Grenzen jede gewünschte Kippbewegung des Hebelrahmens um nahezu jede beliebige Drehachse durchgeführt werden kann. Dazu kann noch die genannte translatorische Bewegung addiert werden. Um dies auszuführen, müssen nur die Beiträge, d.h. Ausschläge der Aktuatoreinheiten entsprechend bemessen und koordiniert werden. Dies wird unten noch an einem Beispiel erläutert werden.

In Fig. 2 sind insbesondere die Aktuatoreinheiten 5a bis 5c genauer dargestellt; Hebelrahmen 2, Spitzenhalter 3 und Abtastspitze 4 sind weggelassen. Das Gehäuse 1 ist durch eine Membranfeder 6 abgeschlossen, die an den Stellen, an denen sich eine Aktuatoreinheit 5a bis 5c befindet, jeweils als Federelement 8a bis 8c ausgebildet ist. Diese können beispielsweise durch radial oder schneckenförmig verlaufende Schlitze in der Membranfeder 6 erzeugt werden. An jedem dieser Federelemente 8a bis 8c ist ein Permanentmagnet 7a bis 7c befestigt, der in Wirkverbindung mit jeweils einer im Gehäuse 1 angeordneten Spule 9a bis 9c steht. Durch elektrische Ansteuerung jeder dieser Spulen erfolgt eine genau kontrollierbare Auslenkung der Permanentmagnete (und damit die oben im Zusammenhang mit Fig. 1 beschriebene Bewegung des hier nicht dargestellten Hebelrahmens).

In einer bevorzugten Ausführungsform werden die Aktuatoreinheiten so angeordnet und betrieben, dass die Abtastspitze 4 in drei zueinander orthogonalen Raumrichtungen bewegt werden kann. Die räumliche Anordnung der Aktuatoreinheiten 5a bis 5c und das Mischverhältnis der durch diese gelieferten Bewegungsbeiträge bestimmen ja die Orthogonalität der erzeugten Bewegung der Abtastspitze. Räumlich hat sich beispielsweise eine Anordnung der drei Aktuatoreinheiten in den Eckpunkten eines gleichschenkligen Dreiecks als besonders geeignet erwiesen. Die Feinjustage kann sowohl mechanisch durch entsprechende Justagevorrichtungen an zwei oder allen drei Aktuatoreinheiten als auch mit elektrischen bzw. elektronischen Mitteln erfolgen, indem das Mischverhältnis der Ströme durch die Spulen 9a bis 9c entsprechend abgeglichen wird. Es können auch beide Methoden, mechanische und elektrische Justage, kombiniert werden.

Ein Beispiel für eine orthogonale Anordnung sei nachfolgend gegeben. Bei einem Abstand der beiden Aktuatoreinheiten 5a und 5c von 12 mm habe die Abtastspitze 4 dazu einen senkrechten Abstand von 6 mm. Eine Bewegung der Abtastspitze 4 parallel zu einer Ebene, die durch 5a-5c und senkrecht zur Membranfeder 6 verläuft, wird nun beispielsweise durch einen bestimmten "vollen" Ausschlag einer der Aktuatoreinheiten 5a oder 5c (die jeweils andere bleibt unbewegt) und einem "halben" Ausschlag der Aktuatoreinheit 5b erzeugt. Alternativ kann Aktuatoreinheit 5b festgehalten und die beiden Aktuatoreinheiten 5a und 5c gegenläufig um gleiche Auschläge bewegt werden.

Eine Bewegung der Abtastspitze 4 parallel zu einer Ebene, die durch sie selbst und 5b und senkrecht zur Membranfeder 6 verläuft, wird beispielsweise durch einen bestimmten "vollen" Ausschlag der Aktuatoreinheit 5b und einem teilweisen, beispielsweise "halben" Ausschlag jeder der Aktuatoreinheiten 5a und 5c erzeugt. Damit wird offensichtlich, dass das Verhältnis der Ausschläge der drei Aktuatoreinheiten 5a bis 5c eine präzise Steuerung der Abtastspitze 4 erlaubt.

Werden die drei Aktuatoreinheiten 5a bis 5c quasi parallel so angesteuert, dass sie gleich grosse Ausschläge ausführen, so "hebt" oder "senkt" sich die Membranfeder 6 parallel zu sich selbst und damit auch die Abtastspitze 4.

Ein besonderes Augenmerk erfordert noch die besonders bei Abtastmikroskopen üblicherweise erforderliche Dämpfung. Auch hier erweist sich die erfindungsgemässe Ausführungsform als besonders sinnreich. Die benutzte Bauweise eines praktisch geschlossenen Gehäuses erlaubt nämlich die Verwendung eines flüssigen, viskosen Dämpfungsmediums im Gehäuse 1, das die auftretenden Schwingungen der Membranfeder 6 mechanisch dämpft. Auch dämpfende Polymere kommen für diese Aufgabe in Frage.

Alternativ oder zusätzlich kann eine aktive elektrische Dämpfung durch entsprechende Auslegung der elektrischen Steuerung erfolgen. Dafür geeignete Schaltungen sind prinzipiell bekannt, z.B. aus der Elektroakustik für die Dämpfung der Eigenresonanz von Lautsprechern. Die erforderliche Anpassung an die hier vorliegenden Gegebenheiten sollte für eine Fachperson keine Schwierigkeiten bergen.

Um einen Eindruck von der physischen Grösse eines Ausführungsbeispiels und der elektrischen Werte zu geben, seien nachfolgend einige Details und beispielhafte Massangaben gegeben, die natürlich von einer Fachperson nahezu beliebig abgeändert werden können. In einer labormässig hergestellten Anordnung besteht das Gehäuse 1 aus Metall und hat etwa die Abmessungen von 20 x 18 mm bei 6 mm Höhe. Die drei Aktuatoreinheiten 5a bis 5c sind identisch aufgebaut und an den Eckpunkten eines gleichschenkligen (fast gleichseitigen) Dreiecks von 11 und 12 mm Kantenlänge angeordnet. Die Grösse des metallischen Hebelrahmens 2 entspricht diesen Massen, die Form kann wie in Fig. 1 gezeigt ausgebildet sein, ist aber praktisch irrelevant bis auf den Abstand der Abtastspitze 4 von der Membranfeder 6 (nachfolgend detailliert beschrieben). Dieser Abstand beträgt ca. 6 mm.

An der offenen Seite des Gehäuses 1 ist eine vorzugsweise metallische, nichtmagnetische Membranfeder 6 angeordnet. Innerhalb des Gehäuses sind drei zu den Aktuatoreinheiten 5a bis 5c gehörende Spulen 9a bis 9c befestigt, von denen jede auf einem Spulenkörper von einigen mm Durchmesser einige tausend Windungen trägt. Die Spule kann wahlweise ohne Kern (Luftspule) oder mit einem Kern aus magnetischem Material ausgeführt sein. Bei Verwendung eines Kerns wird zwar die Wirkung der Spule verstärkt, aber es werden damit auch gewisse Nichtlinearitäten eingeführt. Gegenüber jeder Spule befindet sich je ein Permanentmagnet 7a bis 7c, deren jeder an einem Federelement 8a bis 8c in der genannten Membranfeder 6 befestigt ist. Die Permanentmagnete 7a bis 7c sind von zylindrischer Form und weisen eine Höhe von wenigen mm und einen vergleichbaren Durchmesser auf. Der Abstand zwischen den Permanentmagneten 7a bis 7c und den Spulen 9a bis 9c beträgt im unausgelenkten Ruhezustand weniger als 1 mm. Die Betriebsspannung der Aktuatoreinheiten 5a bis 5c beträgt +/-12 V.

Das Gehäuse 1 kann durch einen Gehäusedeckel abgeschlossen werden (nicht in den Figuren gezeigt), der nur eine vergleichsweise kleine Öffnung für den Spitzenhalter 3 aufweist. Dadurch werden äussere Störungen, beispielsweise akustischer oder magnetischer Art, vermindert oder völlig unterdrückt und können keine Verfälschung der Messungen hervorrufen. Dazu kommt noch, dass ein solcher Gehäusedeckel als mechanischer Endanschlag für die beweglichen Teile, insbesondere der Membranfeder 6, dienen kann, womit Beschädibeweglichen Teile, insbesondere der Membranfeder 6, dienen kann, womit Beschädigungen der Anordnung durch unsachgemässe Behandlung oder ungewollte mechanische Einflüsse vermieden werden.

Die elektrische Schaltung zur Ansteuerung der drei Aktuatoreinheiten ist schematisch in Fig. 3 gezeigt. Sie soll ausgehend von den in Fig. 2 bereits gezeigten Spulen 9a bis 9c der Aktuatoreinheiten beschrieben werden. Die Spulen sind einerseits an Masse angeschlossen. Andererseits wird jede der Spulen 9a bis 9c durch einen Spannungs/Strom-Wandler (U/I-Wandler) 10a bis 10c versorgt, dies wegen der Temperaturabhängigkeit des Spulenwiderstands und der unvermeidbaren Erwärmung jeder Spule beim Betrieb. Die für diese U/I-Wandler erforderlichen Eingangsspannungen stammen aus drei Addier-Gliedem 11 a bis 11c, deren jedes vom Verstärkemetzwerk 12 drei (zu addierende) Eingangsspannungen erhält. Das Verstärkernetzwerk 12 besteht im Beispiel aus insgesamt sechs regelbaren Spannungsverstärkern G1 bis G6, die von drei an den Eingangsklemmen Vx, Vy und Vz anliegenden Eingangspannungen gespeist werden. Wie gezeigt, ist jeder der Addierer 11a bis 11 c unmittelbar mit einer der Eingangsklemmen und über je einen Verstärker mit den beiden anderen Eingangsklemmen verbunden. Dadurch lassen sich beliebige Spannungs-Mischverhältnisse an den Eingängen der drei U/I-Wandler 10a bis 10c erzeugen und somit die Spulen 9a bis 9c der drei Aktuatoreinheiten beliebig ansteuern. Natürlich lässt sich diese einfache und robuste Schaltung bei gleicher oder ähnlicher Wirkungsweise modifizieren, dies sollte eine Fachperson ohne Schwierigkeiten durchführen können.

Gerade wegen ihrer relativen Einfachheit und Robustheit sowohl in mechanischer als auch elektrischer Hinsicht ist die erfindungsgemässe Anordnung offensichtlich auch geeignet zur Feinpositionierung in anderen Bereichen als der Abtastmikroskopie. So sind z.B. bei der robotergesteuerten Fertigung oft ähnlich präzise Bewegungssteuerungen erforderlich, beispielsweise in der Mikromechanik. Auch im medizinischen Operationsbereich treten Aufgaben auf, für die die erfindunggemässe Lösung anwendbar erscheint. Der Fachperson sollte es keine grossen Schwierigkeiten bereiten, das hier für einen Mikroskop-Messkopf beschriebene Ausführungsbeispiel so zu modifizieren, dass es sich für ähnliche Feinpositionierungen in anderen Bereichen eignet und dabei die gleichen Vorteile wie bei der beschriebenen Anwendung erzielt werden. So ist beispielsweise eine Umkehrung der Anordnung für ein Mikroskop in der Weise denkbar, dass die zu untersuchende Probe auf dem Aktuator und die Sonde oder Abtastspitze stationär angeordnet sind. Derartige Variationen sollen von den nachfolgenden Patentansprüchen mit umfasst werden.

## Patentansprüche

1. Positionierkopf mit einer Einrichtung zur räumlich beliebigen Positionierung der Abtastspitze (4) eines Rastersondenmikroskop mit einer Mehrzahl von die Positionierung bewirkenden Aktuatoreinheiten (5a bis 5c), die auf einen gemeinsamen, beweglichen, jedoch in sich starren, die Abtastspitze tragenden Hebelrahmen (2) wirken, wobei
- die Aktuatoreinheiten (5a bis 5c) im wesentlichen in einer Ebene angeordnet sind und ihre Wirkungsrichtungen zumindest annähernd parallel verlaufen,
- jede der Aktuatoreinheiten einen federnd gelagerten, beweglichen Teil (7a bis 7c) und einen gegenüber dem Positionierkopf festen Teil (9a bis 9c) aufweist,
- der bewegliche Teil jeder Aktuatoreinheit (5a bis 5c) mit dem gemeinsamen, beweglichen Hebelrahmen (2) verbunden ist,
- eine elektrische Steuereinrichtung vorgesehen ist, vermittels der die Aktuatoreinheiten in koordinierter Weise so ansteuerbar sind, dass eine gewünschte Bewegung der Abtastspitze (4) erzeugbar ist.

2. Positionierkopf nach Anspruch 1, bei dem
- zumindest drei Aktuatoreinheiten (5a bis 5c) vorgesehen sind, die in einem gemeinsamen Gehäuse (1) im wesentlichen in einer Ebene angeordnet sind.

3. Positionierkopf nach Anspruch 2, bei dem
- die Aktuatoreinheiten (5a bis 5c) als elektromagnetische Einheiten ausgebildet sind, wobei
- der feste Teil einer Aktuatoreinheit (5a bis 5c) eine im Gehäuse (1) befestigte Spule (9a bis 9c) und
- der bewegliche Teil einer Aktuatoreinheit (5a bis 5c) einen elastisch aufgehängten Permanentmagneten (7a bis 7c) aufweist.

4. Positionierkopf nach Anspruch 3, bei dem
- die Spule (9a bis 9c) von einer Stromquelle (10a bis 10c) angesteuert wird, die als Spannungs/Strom-Wandler (U/I-Wandler) ausgebildet ist.

5. Positionierkopf nach zumindest einem der Ansprüche 2 bis 4, bei dem
- zumindest ein sich teilweise oder ganz über das Gehäuse (1) erstreckendes, elastisches Element (6) vorgesehen ist, das einen oder mehrere bewegliche Teile (7a bis 7c) einer Aktuatoreinheit (5a bis 5c) trägt.

6. Positionierkopf nach Anspruch 5, bei dem
- das elastische Element als eine sich im wesentlichen über das Gehäuse (1) erstreckende Membran (6) ausgebildet ist und
- mindestens einen federnden Abschnitt (8a bis 8c) aufweist, auf denen ein beweglicher Teil (7a bis 7c) einer Aktuatoreinheit (5a bis 5c) angebracht ist.

7. Positionierkopf nach zumindest einem der Ansprüche 5 oder 6, bei dem
- das elastische Element (6) aus einheitlichem, elastischem Material besteht,
- zumindest näherungsweise parallel zur Ebene der Aktuatoreinheiten (5a bis 5c) verläuft,
- am Umfang zumindest punktuell am Gehäuse (1) befestigt ist und
- mehrere, vorzugsweise je einen für jedes bewegliche Teil (7a bis 7c) einer Aktuatoreinheit (5a bis 5c), federnde Abschnitte (8a bis 8c) aufweist, die durch entsprechende Aussparungen im Material ausgebildet sind.

8. Positionierkopf nach zumindest einem der vorhergehenden Ansprüche, bei dem
- der die beweglichen Teile der Aktuatoreinheiten (5a bis 5c) verbindende Hebelrahmen (2), im wesentlichen als ebene Platte ausgebildet ist, die zumindest näherungsweise parallel zur Ebene der Aktuatoreinheiten (5a bis 5c) verläuft und auf der ein die Abtastspitze (4) tragender Halter (3) befestigt ist, der sich ausserhalb dieser Ebene erstreckt.

9. Positionierkopf nach Anspruch 8, bei dem
- ein die beweglichen Teile einer Aktuatoreinheit im wesentlichen abdeckender Gehäuseabschluss vorgesehen ist, der eine Öffnung für den sich nach ausserhalb erstreckenden Halter (3) aufweist,
- wobei dieser Gehäuseabschluss wahlweise als mechanischer Anschlag für die beweglichen Teile dienen kann.

10. Positionierkopf nach zumindest einem der vorhergehenden Ansprüche, bei dem
- drei Aktuatoreinheiten (5a bis 5c) vorgesehen sind, die räumlich ein gleichschenkliges Dreieck aufspannen, dessen Basis vorzugsweise länger als die beiden gleichen Schenkel ist und über dessen Basis sich ein die Abtastspitze (4) tragender Halter (3) erstreckt.

11. Positionierkopf nach zumindest einem der vorhergehenden Ansprüche, bei dem
- die erforderliche Dämpfung der Eigenresonanz mechanisch und/oder über die Aktuatoreinheiten (5a, 5b, 5c) elektrisch erfolgt.

12. Positionierkopf nach Anspruch 11, bei dem
- die mechanische Dämpfung der Eigenresonanz vermittels eines viskosen Dämpfungsmediums im Gehäuse (1), insbesondere eines flüssigen oder polymeren Dämpfungsmediums, erfolgt.

13. Positionierkopf nach zumindest einem der vorhergehenden Ansprüche, bei dem
- die beweglichen Teile jeder Aktuatoreinheit (5a bis 5c) durch die elektrische Steuereinrichtung (Fig. 3) so betreibbar sind, dass die Abtastspitze (4) in drei orthogonale Raumrichtungen bewegbar ist, wobei neben Kippbewegungen eine translatorische Bewegung im wesentlichen senkrecht zur Ebene der Aktuatoreinheiten ermöglicht wird.

## Claims

1. A positioning head with a device for any desired spatial positioning of the scanning tip (4) of a scanning probe microscope, comprising a multiple number of actuator units (5a to 5c) which cause positioning and which act on a common movable but intrinsically rigid fulcrum frame (2) which carries the scanning tip, wherein
- the actuator units (5a to 5c) are essentially arranged in one plane, with their directions of action being at least approximately parallel;
- each of the actuator units comprises a resiliently held moving part (7a to 7c), and a part (9a to 9c) which is fixed in relation to the positioning head;
- the movable part of each actuator unit (5a to 5c) is connected to the common movable fulcrum frame (2);
- an electrical control device is provided by means of which the actuator units can be controlled in a coordinated way so that a desired movement of the scanning tip (4) can be generated.

2. The positioning head according to claim 1, in which
- at least three actuator units (5a to 5c) are provided which are arranged in a common housing (1) essentially in one plane.

3. The positioning head according to claim 2, in which
- the actuator units (5a to 5c) are configured as electromagnetic units, wherein
- the fixed part of an actuator unit (5a to 5c) comprises a coil (9a to 9c) attached in the housing (1); and
- the movable part of an actuator unit (5a to 5c) comprises a resiliently suspended permanent magnet (7a to 7c).

4. The positioning head according to claim 3, in which
- the coil (9a to 9c) is controlled by a current source (10a to 10c), which is a voltage/current transducer (U/I transducer).

5. The positioning head according to at least one of claims 2 to 4, in which
- at least one elastic element (6) is provided which extends in part or entirely along the housing (1), said element (6) carrying one or several movable parts (7a to 7c) of an actuator unit (5a to 5c).

6. The positioning head according to claim 5, in which the elastic element
- is configured as a diaphragm (6) essentially extending along the housing (1); and
- comprises at least one resilient section (8a to 8c) to which a movable part (7a to 7c) of an actuator unit (5a to 5c) is fixed.

7. The positioning head according to at least one of claims 5 or 6, in which the elastic element (6)
- consists of uniform elastic material;
- extends at least approximately parallel to the plane of the actuator units (5a to 5c);
- at the circumference is at least attached in points to the housing (1); and
- comprises several resilient sections (8a to 8c), preferably one each for each movable part (7a to 7c) of an actuator unit (5a to 5c), said sections (8a to 8c) being formed by respective recesses in the material.

8. The positioning head according to at least one of the preceding claims, in which
- the fulcrum frame (2) connecting the movable parts of the actuator units (5a to 5c) is essentially a plane plate which extends at least approximately parallel to the plane of the actuator units (5a to 5c), with a holder (3) holding the scanning tip (4) being attached to said plate, said holder (3) extending outside said plane.

9. The positioning head according to claim 8, in which
- a housing closure which essentially covers the movable parts of an actuator unit is provided, said housing closure comprising an aperture for the outward extending holder (3);
- with said housing closure optionally serving as a mechanical end stop for the movable parts.

10. The positioning head according to at least one of the preceding claims, in which
- three actuator units (5a to 5c) are provided which spatially describe an isosceles triangle whose base is preferably longer than the two equal sides, and with a holder (3) carrying the scanning tip (4) extending across the base of said isosceles triangle.

11. The positioning head according to at least one of the preceding claims, in which
- the required damping of the self resonance occurs mechanically and/or by way of the actuator units (5a, 5b, 5c) electrically.

12. The positioning head according to claim 11, in which
- mechanical damping of the self resonance occurs by means of a viscous damping medium in the housing (1), in particular of a liquid or polymer damping medium.

13. The positioning head according to at least one of the preceding claims, in which
- the movable parts of each actuator unit (5a to 5c) can be operated by the electrical control device (Fig. 3) such that the scanning tip (4) can be moved in three orthogonal spatial directions, with tilt movements and a translatory movement essentially perpendicular to the plane of the actuator units being possible.

## Revendications

1. Tête de positionnement présentant un dispositif permettant n'importe quel positionnement dans l'espace de l'aiguille de palpage (4) d'un microscope par sonde à balayage à l'aide d'une pluralité d'unités d'actionnement (5a à 5c) assurant le positionnement, qui agissent sur un cadre de levier (2) commun mobile mais rigide en soi, supportant l'aiguille de palpage,
- les unités d'actionnement (5a à 5c) étant disposées sensiblement dans un plan et leurs sens d'action s'étendant du moins approximativement en parallèle,
- chacune des unités d'actionnement présentant une pièce mobile (7a à 7c) s'appuyant de manière élastique et une pièce (9a à 9c) fixe par rapport à la tête de positionnement,
- la pièce mobile de chaque unité d'actionnement (5a à 5c) étant raccordée au cadre à levier mobile commun (2),
- étant prévu un dispositif de commande électrique, au moyen duquel les unités d'actionnement peuvent être commandées de façon coordonnée de manière à pouvoir générer un mouvement souhaité de l'aiguille de palpage (4).

2. Tête de positionnement selon la revendication 1, dans laquelle
- il est prévu au moins trois unités d'actionnement (5a à 5c) qui sont disposées dans un boîtier commun (1) sensiblement dans un plan.

3. Tête de positionnement selon la revendication 2, dans laquelle
- les unités d'actionnement (5a à 5c) sont réalisées sous forme d'unités électromagnétiques,
- la pièce fixe d'une unité d'actionnement (5a à 5c) étant une bobine (9a à 9c) fixée dans le boîtier (1) et
- la pièce mobile d'une unité d'actionnement (5a à 5c) présentant un aimant permanent (7a à 7c) à suspension élastique.

4. Tête de positionnement selon la revendication 3, dans laquelle
- la bobine (9a à 9c) est activée par une source de courant (10a à 10c) qui est réalisée sous forme d'un transducteur de tension/courant (transducteur U/I).

5. Tête de positionnement selon au moins l'une quelconque des revendications 2 à 4, dans laquelle
- il est prévu au moins un élément élastique (6) s'étendant partiellement ou totalement au dessus du boîtier (1) et qui supporte une ou plusieurs pièces mobiles (7a à 7c) d'une unité d'actionnement (5a à 5c).

6. Tête de positionnement selon la revendication 5, dans laquelle
- l'élément élastique est réalisé sous forme d'une membrane (6) s'étendant sensiblement au dessus du boîtier (1) et
- présente au moins une section résiliente (8a à 8c) sur laquelle est installée une pièce mobile (7a à 7c) d'une unité d'actionnement (5a à 5c).

7. Tête de positionnement selon au moins l'une quelconque des revendications 5 ou 6, dans laquelle
- l'élément élastique (6) est composé d'un matériau élastique homogène,
- s'étend du moins approximativement en parallèle au plan des unités d'actionnement (5a à 5c),
- est fixé par sa circonférence du moins ponctuellement au boîtier (1) et
- présente plusieurs sections résilientes (8a à 8c), de préférence à chaque fois une pour chaque pièce mobile (7a à 7c) d'une unité d'actionnement (5a à 5c) et qui sont réalisées au moyen d'évidements appropriés pratiqués dans le matériau.

8. Tête de positionnement selon au moins l'une quelconque des revendications précédentes, dans laquelle
- les cadres à levier (2) raccordant les pièces mobiles des unités d'actionnement (5a à 5c) sont réalisés sensiblement sous forme d'une plaque plane qui s'étend du moins approximativement en parallèle au plan des unités d'actionnement (5a à 5c) et sur laquelle est fixé un support (3) portant l'aiguille de palpage (4) et qui s'étend hors de ce plan.

9. Tête de positionnement selon la revendication 8, dans laquelle
- il est prévu un boîtier fermé recouvrant sensiblement les pièces mobiles d'une unité d'actionnement et qui présente un orifice pour le support (3) s'étendant vers l'extérieur,
- ce boîtier fermé pouvant servir facultativement de butée mécanique pour les pièces mobiles.

10. Tête de positionnement selon au moins l'une quelconque des revendications précédentes, dans laquelle
- il est prévu trois unités d'actionnement (5a à 5c) qui recouvrent dans l'espace un triangle isocèle dont la base est de préférence plus longue que les deux branches égales et sur la base duquel s'étend un support (3) portant l'aiguille de palpage (4).

11. Tête de positionnement selon au moins l'une quelconque des revendications précédentes, dans laquelle
- l'amortissement nécessaire de la résonance propre est assuré mécaniquement et/ou électriquement par les unités d'actionnement (5a, 5b, 5c).

12. Tête de positionnement selon la revendication 11, dans laquelle
- l'amortissement mécanique de la résonance propre est assuré dans le boîtier (1) au moyen d'un fluide d'amortissement visqueux, notamment d'un fluide l'amortissement liquide ou à base de polymère.

13. Tête de positionnement selon au moins l'une quelconque des revendications précédentes, dans laquelle
- les pièces mobiles de chaque unité d'actionnement (5a à 5c) sont actionnables par le dispositif de commande électrique (fig. 3) de manière à ce que l'aiguille de palpage (4) soit mobile dans trois directions spatiales orthogonales, un mouvement translatoire étant, outre des mouvements de basculement, possible sensiblement à la perpendiculaire du plan des unités d'actionnement.
